# EUROPÄISCHE PATENTSCHRIFT

(11) **EP 3 756 253 B1**
(45) Veröffentlichungstag und Bekanntmachung des Hinweises auf die Patenterteilung: **18.06.2025**
(21) Anmeldenummer: 19706537.8
(22) Anmeldetag: 18.02.2019
(51) Int. Cl.: H02H 9/00

(54) **ENTLADEVORRICHTUNG, ELEKTRISCHE EINHEIT UND ENTLADEVERFAHREN**
DISCHARGING DEVICE, ELECTRICAL UNIT AND DISCHARGING METHOD
DISPOSITIF DE DÉCHARGE, UNITÉ ÉLECTRIQUE ET PROCÉDÉ DE DÉCHARGE

(30) Priorität: 19.02.2018 DE 102018202509; 20.02.2018 DE 102018202579; 25.05.2018 DE 102018208292
(43) Veröffentlichungstag der Anmeldung: 30.12.2020
(73) Patentinhaber: Brose Fahrzeugteile SE & Co. Kommanditgesellschaft, Würzburg, 97076 Würzburg (DE)
(72) Erfinder: WIND, Christian, 86899 Landsberg am Lech (DE)
(74) Vertreter: FDST Patentanwälte
(86) Internationale Anmeldenummer: PCT/EP2019/053955
(87) Internationale Veröffentlichungsnummer: WO 2019/158748

(56) Entgegenhaltungen:
- EP-A1- 3 182 572
- DE-A1- 102012 204 866
- US-A1- 2011 057 627
- US-A1- 2013 002 209

## Beschreibung

Die Erfindung betrifft eine Entladevorrichtung zum aktiven Entladen eines elektrischen Netzes, insbesondere eines Hochspannungsnetzes, oder einer elektrisch betriebenen Einheit eines solchen Netzes. Des Weiteren betrifft die Erfindung eine solche elektrische Einheit sowie ein Entladeverfahren.

Bei modernen Kraftfahrzeugen kommen neben den üblicherweise mit einer Spannung mit einem Spannungswert von 12 Volt betriebenen Komponenten häufig auch Komponenten zum Einsatz, die mit einem deutlich höheren Betriebsspannungswert betrieben werden. Insbesondere bei Fahrzeugen mit vollelektrischem Antrieb oder Hybridantrieb können derart hohe Betriebsspannungswerte 100 Volt überschreiten. Dabei werden bereits Spannungswerte von mehr als 60 Volt im Automobilbereich als "Hochspannung" bezeichnet. Insbesondere die mit Hochspannung betriebenen elektrischen Einheiten - meist elektrische Antriebssysteme, die zum Beispiel einen Fahrmotor, eine Kühl- oder Schmiermittelpumpe, ein Klimakompressor oder dergleichen umfassen, sind dabei in einem sogenannten "Hochspannungsnetz" eingebunden. Meist umfasst ein solches Hochspannungsnetz auch wenigstens einen Energiespeicher (bspw. einen Kondensator), der jeweils einer oder allen elektrischen Einheiten des Hochspannungsnetzes zugeordnet ist. Dieser dient beispielsweise dazu, den für die elektrische Einheit oder die elektrischen Einheiten erforderlichen Betriebsspannungswert konstant zu halten.

Aus Sicherheitsgründen ist es jedoch erforderlich, dass derartige Hochspannungsnetze zum Einen abgeschaltet werden können und zum Anderen insbesondere entladen werden können. Dies ist insbesondere dann der Fall, wenn Personen in Kontakt mit dem jeweiligen Hochspannungsnetz kommen können oder es anderweitig zu Kurzschlüssen kommen kann. Dies ist beispielsweise bei einer Fahrzeugwartung oder -reparatur oder unter Umständen bei einem Unfall der Fall. Um eine automatische Entladung zu ermöglichen, ist die zu entladende elektrische Einheit oder zumindest der zugeordnete Energiespeicher regelmäßig reversibel über einen Schalter und einen Widerstand mit Referenzpotential verbindbar. Der Schalter oder insbesondere die Ansteuerung seines Steueranschlusses ist dabei häufig derart gestaltet, dass der Schalter auch bei einem unvorhergesehen Ausfall der Ansteuerung in seinen leitenden Zustand versetzt wird, sodass die elektrische Einheit oder zumindest der Energiespeicher entladen werden. Problematisch ist es hierbei häufig, dass sich bei der Entladung der Schalter und/oder Widerstand erwärmen und schlimmstenfalls durch die dabei auftretende Temperatur zerstört werden.

Aus EP 3 182 572 A1 ist eine elektronische Schaltung, insbesondere eine Gleichstrom-Zwischenkreis-Schaltung, mit einem High-Side-Gleichspannungspegel, einem Eingang und einem Ausgang bekannt. Die elektronische Schaltung umfasst einen Gleichstrom-Zwischenkreis-Kondensator und eine Einschaltschaltung zur Begrenzung eines Eingangsstroms auf einen vorbestimmten Pegel, wobei die Einschaltschaltung zwischen einer Versorgungsleitung des Gleichstrom-Zwischenkreis-Kondensators und dem Eingang angeschlossen ist. Die Einschaltschaltung umfasst ein Ladewiderstandselement, ein parallel zu dem Ladewiderstandselement geschaltetes Schaltelement und ein Steuermittel zur Steuerung des Schaltelements, wobei das Steuermittel dazu eingerichtet ist, das Schaltelement einzuschalten, wenn der Eingangsstrom unter einen vorbestimmten Strompegel fällt. Das Steuermittel umfasst ferner ein Triggersteuerelement, das dazu ausgelegt ist, eine Differenzspannung über dem Schaltelement zu erfassen und das Schaltelement auszuschalten, wenn die erfasste Differenzspannung über eine vorbestimmte Schwellenspannung ansteigt.

Der Erfindung liegt die Aufgabe zugrunde, eine möglichst sichere Entladung eines elektrischen Netzes oder einer elektrisch betriebenen Einheit eines solchen elektrischen Netzes zu ermöglichen.

Diese Aufgabe wird erfindungsgemäß gelöst durch eine Entladevorrichtung zum aktiven Entladen mit den Merkmalen des Anspruchs 1. Des Weiteren wird diese Aufgabe erfindungsgemäß gelöst durch eine elektrisch betriebene Einheit mit den Merkmalen des Anspruchs 9. Außerdem wird die Aufgabe erfindungsgemäß gelöst durch ein Entladeverfahren mit den Merkmalen des Anspruchs 10. Vorteilhafte und teils für sich erfinderische Ausführungsformen und Weiterbildungen der Erfindung sind in den Unteransprüchen und der nachfolgenden Beschreibung dargelegt.

Die erfindungsgemäße Entladevorrichtung dient zum aktiven Entladen eines elektrischen Netzes, insbesondere eines Hochspannungsnetzes, oder einer elektrisch betriebenen Einheit, die vorzugsweise Teil eines solchen Hochspannungsnetzes ist oder ein solches umfasst. Die Entladevorrichtung weist dabei eine Entladeschaltung auf, über die insbesondere in einem Entladebetrieb ein zu entladendes Bauteil des Hochspannungsnetzes (auch: "Bordnetzes") bzw. der elektrisch betriebenen Einheit mit einem Referenzpotential (vorzugsweise Massepotential) verbunden ist. Die Entladeschaltung weist dazu einen im Folgenden als "Strombegrenzungswiderstand" bezeichneten Widerstand und einen ersten Schalter, im Folgenden als "Entladeschalter" bezeichnet, auf. Der Entladeschalter dient dabei zum insbesondere reversiblen Verbinden dieses zu entladenden Bauteils mit dem Referenzpotential mittelbar über den Strombegrenzungswiderstand. D. h. die Entladeschaltung ist derart gestaltet, dass das Hochspannungsnetz oder zumindest die elektrisch betriebene Einheit (insbesondere zumindest das zu entladende Bauteil) bei geschlossenem (d. h. durchgeschaltetem oder leitend geschaltetem) Entladeschalter über den Strombegrenzungswiderstand mit dem Referenzpotential elektrisch leitfähig verbunden ist. Außerdem weist die Entladevorrichtung eine zu dem Entladeschalter steueranschlussseitig angeordnete und vorzugsweise mit diesem leitfähig verbundene Begrenzungsschaltung auf, die zur Überwachung und Begrenzung einer im Entladebetrieb an dem Entladeschalter und/oder an dem Strombegrenzungswiderstand auftretenden Erwärmung dient. Die Begrenzungsschaltung weist dabei einen NTC-Widerstand (auch als "Heißleiter" bezeichnet) auf, dessen Widerstandswert folglich im erwärmten Zustand abnimmt. Dieser NTC-Widerstand ist dabei thermisch mit dem Entladeschalter und/oder dem Strombegrenzungswiderstand gekoppelt.

Vorzugsweise ist der NTC-Widerstand nur mit dem Entladeschalter thermisch gekoppelt.

Unter einem Hochspannungsnetz, insbesondere einem Hochspannungs-Bordnetz eines Fahrzeugs wird hier und im Folgenden insbesondere ein (Bord-) Netz verstanden, das mit einer Betriebsspannung mit einem Spannungswert größer oder gleich 60 Volt betrieben wird.

Vorzugsweise ist der NTC-Widerstand derart verschaltet, dass im erwärmten Zustand des NTC-Widerstands - mithin im "gut" leitenden Zustand des NTC-Widerstands; wobei als erwärmter Zustand insbesondere ein Temperaturwert von mehr als 80, vorzugsweise von mehr als 100, insbesondere von mehr als 150 Grad Celsius verstanden wird - eine unmittelbare oder mittelbare Reduktion einer zur Durchschaltung des Entladeschalters erforderlichen Steuerspannung oder eines erforderlichen Steuerstroms erfolgt. Dies führt wiederum zur Reduktion eines über den Entladeschalter fließenden (Entlade-) Stroms und/oder zur Abschaltung der Entladeschaltung, letzteres insbesondere indem der Entladeschalter mangels einer hinreichend hohen Steuerspannung bzw. eines hinreichend hohen Steuerstroms geöffnet wird.

Im Entladebetrieb erwärmen sich der der Entladeschalter sowie meist auch der Strombegrenzungswiderstand aufgrund der Verlustleistung. Dies kann bis zum Versagen wenigstens eines der beiden Bauteile führen, was wiederum zur Zerstörung des Hochspannungsnetzes und/oder der elektrisch betriebenen Einheit führen kann. Dadurch, dass der NTC-Widerstand thermisch mit dem Entladeschalter bzw. dem Strombegrenzungswiderstand gekoppelt ist, ist vorteilhafterweise eine Überwachung und insbesondere eine Reduktion der in die Entladeschaltung eingebrachten Wärme vor deren (zumindest thermischen) Überlastung ermöglicht. Insbesondere für den Fall, dass das Hochspannungsnetz oder die elektrisch betriebene Einheit als zu entladendes Bauteil einen Energiespeicher, beispielsweise einen Kondensator aufweist, wird so ein vergleichsweise sicherer Entladebetrieb auch bei Ausfall eines übergeordneten Überwachungssystems insbesondere des Fahrzeugs ermöglicht.

In einer bevorzugten Ausführung ist der Entladeschalter insbesondere durch einen Leistungstransistor, vorzugsweise durch einen Bipolartransistor mit isolierter Gate-Elektrode (englisch insulated-gate bipolar transistor, kurz: IGBT) oder durch einen Metall-Oxid-Halbleiter-Feldeffekttransistor (englisch metal-oxide-semiconductor field-effect transistor, kurz: MOS-FET) ausgebildet. Insbesondere stellt der Entladeschalter somit einen spannungsgesteuerten Schalter dar. Insbesondere weist der Entladeschalter dabei einen Kollektor- oder Drainanschluss, einen Emitter- oder Sourceanschluss und einen Gateanschluss auf, wobei es sich bei dem Gateanschluss um den vorstehend genannten Steueranschluss handelt. Weiter vorzugsweise ist der Entladeschalter dabei derart in dem Hochspannungsnetzes eingebunden, dass der Kollektor- oder Drainanschluss mit dem zu entladenden Teil (Bauteil) des Hochspannungsnetzes bzw. der zu entladenden elektrisch betriebenen Einheit (zumindest mittelbar) verknüpft ist. Der Emitter- oder Sourceanschluss ist dabei vorzugsweise auf das Referenzpotential geführt, insbesondere unter Zwischenschaltung des vorstehend genannten Strombegrenzungswiderstands. Dabei wirkt die (im Entladebetrieb) am Strombegrenzungswiderstand abfallende Spannung auf die am Steueranschluss anliegende Steuerspannung zurück, wodurch wiederum der über den Entladeschalter fließende Entladestrom begrenzt wird oder ist. Je nach Wahl des Strombegrenzungswiderstands kann so insbesondere der maximale Entladestrom voreingestellt werden.

Um möglichst eine überproportionale Strombegrenzung in dem Entladeschalter insbesondere oberhalb der Normaltemperatur zu ermöglichen, ist in einer zweckmäßigen Ausführung der Erfindung der NTC-Widerstand mit dem Steueranschluss des Entladeschalters und insbesondere vorzugsweise untrennbar sowie insbesondere mittelbar mit dem Referenzpotential verschaltet. Vorzugsweise ist der NTC-Widerstand dabei außerdem (insbesondere in Reihe) mit einem "Zusatzwiderstand" verschaltet, der insbesondere dazu dient, eine Temperaturschwelle vorzugeben, insbesondere einzustellen, ab der die Begrenzung des Entladestroms wirksam wird. Vorzugsweise ist dieser Zusatzwiderstand zwischen den NTC-Widerstand und das Referenzpotential geschaltet. Durch diese Verschaltung des NTC-Widerstands erfolgt somit bei Erwärmung und mithin steigender Leitfähigkeit des NTC-Widerstands insbesondere erst oberhalb der durch den Zusatzwiderstand vorgegebenen Temperaturschwelle die (somit überproportionale) Begrenzung vorzugsweise der Steuerspannung am Steueranschluss des (vorzugsweise als IGBT oder MOS-FET ausgestalteten) Entladeschalters und somit des Entladestroms. Oberhalb der Temperaturschwelle (und somit unabhängig von dem Zusatzwiderstand) erfolgt die Begrenzung insbesondere in Abhängigkeit von dem Temperaturverhalten des NTC-Widerstands optional ebenfalls überproportional oder auch linear.

In einer zweckmäßigen Ausführung umfasst die Entladevorrichtung, vorzugsweise die Begrenzungsschaltung eine insbesondere steuerbare oder zumindest einstellbare Spannungsreferenz, bspw. eine steuerbare Zenerdiode, die zwischen den Steueranschluss des Entladeschalters und das Referenzpotential geschaltet ist. Der NTC-Widerstand ist außerdem - neben seiner vorstehend beschriebenen Anbindung an den Steueranschluss des Entladeschalters insbesondere mit seinem anderen Anschluss - mit einem Steuereingang der Spannungsreferenz verschaltet. Aufgrund der Spannungsreferenz kann vorteilhafterweise die Begrenzungsschaltung besser, insbesondere präzise und/oder auf einfache Weise ausgelegt (konfiguriert) werden. Der NTC-Widerstand, vorzugsweise in Kombination mit dem vorstehend beschriebenen Zusatzwiderstand stellt dabei einen Sollwert für die Spannungsreferenz (und dient damit auch als Temperaturschwelle, ab der die Reduktion des Entladestroms einsetzt). Die Spannungsreferenz beeinflusst dabei vorzugsweise die Steuerspannung am Steueranschluss des Entladeschalters. Bei Erwärmung des NTC-Widerstands bewirkt dieser aufgrund seiner zunehmenden Leitfähigkeit insbesondere indirekt mittels der Spannungsreferenz die Reduktion der Steuerspannung am Steueranschluss des Entladeschalters. Dadurch wird wiederum der über den Entladeschalter fließende Strom (Entladestrom) reduziert, so dass die Verlustleistung im Entladeschalter sinkt. Die Temperatur des Entladeschalters kann so vorteilhafterweise in einem für die Entladeschaltung unkritischen Temperaturbereich gehalten werden - insbesondere bei geeigneter Auslegung des NTC-Widerstrands, des Zusatzwiderstands etc.. Kühlt der Entladeschalter ab, kühlt sich auch der NTC-Widerstand bedingt durch die thermische Kopplung ab. Dadurch sinkt die Leitfähigkeit des NTC-Widerstands und die Steuerspannung am Steueranschluss des Entladeschalters steigt wiederum. Dadurch setzt sich die bestimmungsgemäße Entladung über den Entladeschalter und den Strombegrenzungswiderstand wieder in vollem oder gegebenenfalls zumindest größerem Umfang (als bei wärmerem NTC-Widerstand) fort. Grundsätzlich ist zwar ein Einsatz des NTC-Widerstands ohne die Spannungsreferenz möglich. Allerdings müsste in diesem Fall der NTC-Widerstand vergleichsweise niederohmig gewählt werden, was wiederum eine höhere (insbesondere strombedingte) Eigenerwärmung des NTC-Widerstands zur Folge hätte.

In einer zweckmäßigen und insbesondere zur vorstehend beschriebenen Ausführung alternativen Ausführung der Erfindung weist die Begrenzungsschaltung einen zweiten Schalter auf. Der NTC-Widerstand ist dabei mit dem Steueranschluss dieses zweiten Schalters verschaltet. Außerdem ist der zweite Schalter derart verschaltet, dass im vollständig eingeschalteten (d. h. "durchgeschalteten") Zustand des zweiten Schalters der Steueranschluss des Entladeschalters mit dem Referenzpotential verbunden ist. Im vollständig eingeschalteten Zustand des zweiten Schalters fällt somit - konkret für den Fall, dass der Entladeschalter als IGBT oder MOS-FET ausgebildet ist - am Steueranschluss des Entladeschalters die Steuerspannung gegen Null oder zumindest auf einen derart geringen Wert ("Schaltwert") ab, dass der Entladeschalter öffnet. In diesem Fall wird die Entladeschaltung "deaktiviert" oder abgeschaltet. Der NTC-Widerstand ist in einer optionalen Variante auch derart ausgelegt und/oder thermisch mit dem Entladeschalter bzw. dem Strombegrenzungswiderstand gekoppelt, dass bei zunehmender Erwärmung und somit zunehmender Leitfähigkeit des NTC-Widerstands insbesondere ein für die vollständige Durchschaltung des zweiten Schalters erforderlicher Grenzwert einer zugeordneten zweiten Steuerspannung oder gegebenenfalls eines zweiten Steuerstroms überschritten wird. Optional ist auch dieser Grenzwert entsprechend (insbesondere über die Wahl des zweiten Schalters) angepasst. In diesem Fall erfolgt somit indirekt mittels des zweiten Schalters eine Reduktion, insbesondere eine Abschaltung der Steuerspannung am Steueranschluss des Entladeschalters.

Dadurch, dass bei vollständiger Durchschaltung des zweiten Schalters der Entladeschalter geöffnet wird, kann der Entladeschalter sowie gegebenenfalls der Strombegrenzungswiderstand (wieder) auf einen unkritischen Temperaturwert abkühlen. Aufgrund der thermischen Kopplung des NTC-Widerstands mit dem Entladeschalter kühlt somit auch der NTC-Widerstand ab, wodurch dessen Leitfähigkeit sinkt und entsprechend der zweite Schalter wieder geöffnet wird. Dadurch setzt sich die bestimmungsgemäße Entladung der elektrisch betriebenen Einheit oder des Hochspannungsnetzes über den Entladeschalter und den Strombegrenzungswiderstand fort. In einer alternativen Variante ist der Betriebspunkt des zweiten Schalters und/oder insbesondere die thermische Kopplung des Entladeschalters bzw. des Strombegrenzungswiderstand mit dem NTC-Widerstand zweckmäßigerweise derart gewählt, dass auch bei zunehmender Erwärmung und somit zunehmender Leitfähigkeit des NTC-Widerstands der für die vollständige Durchschaltung des zweiten Schalters erforderliche Grenzwert nicht überschritten, sondern insbesondere nur entsprechend zunehmend angenähert wird. Dadurch befindet sich bei zunehmender Erwärmung des NTC-Widerstands der zweite Schalter vorteilhafterweise in einem teilleitenden Betrieb (insbesondere mit entsprechend zunehmender Leitfähigkeit des zweiten Schalters), so dass nur eine teilweise Reduktion der Steuerspannung am Steueranschluss des Entladeschalters (vorzugsweise oberhalb dessen Schaltwerts) und somit keine vollständige Öffnung des Entladeschalters erfolgt.

In einer bevorzugten Ausführung ist der vorstehend beschriebene zweite Schalter durch einen Feldeffekttransistor, insbesondere einen MOS-FET gebildet und somit insbesondere spannungsgesteuert. Der NTC-Widerstand ist in diesem Fall also insbesondere mit einem "Gateanschluss" des Feldeffekttransistors, insbesondere des MOS-FET verschaltet.

In jeder der vorstehend beschriebenen Ausführungsformen weist in einer bevorzugten Ausführung die Entladevorrichtung eine Steuerschaltung auf, die wiederum Schaltungsmittel umfasst, um den Steueranschluss des Entladeschalters reversibel mit dem Referenzpotential zu verschalten. Insbesondere dient diese Steuerschaltung dazu, den Entladeschalter in seinem geöffneten Zustand zu halten und damit den bestimmungsgemäßen Betrieb - insbesondere einen bestimmungsgemäßen Dauerbetrieb - des Hochspannungsnetzes bzw. der elektrisch betriebenen Einheit aufrecht zu halten.

In zweckmäßigen Ausführung umfassen die Schaltungsmittel einen weiteren (gegebenenfalls dritten) Schalter, insbesondere einen Transistor, vorzugsweise einen Bipolartransistor. Dieser Schalter ist (insbesondere kollektorseitig) mit dem Steueranschluss des Entladeschalters gekoppelt. Insbesondere für den Fall, dass die Begrenzungsschaltung den zweiten Schalter umfasst, ist dieser dritte Schalter vorzugsweise direkt mit dem Steueranschluss des Entladeschalters gekoppelt. Der dritte Schalter dient hierbei somit unmittelbar zur Verschaltung des Steueranschlusses des Entladeschalters mit dem Referenzpotential.

Vorzugsweise umfasst die Steuerschaltung auch einen Controller zur Steuerung der Schaltungsmittel, insbesondere des dritten Schalters.

Vorzugsweise ist der dritte Schalter in jedem der vorstehend beschriebenen Fälle für den bestimmungsgemäßen Dauerbetrieb durchgeschaltet, sodass der Entladeschalter geöffnet ist. Bei Abschalten oder Ausfall der Steuerschaltung wird mithin in jedem Fall der dritte Schalter geöffnet, somit der Entladeschalter vorteilhafterweise automatisch durchgeschaltet und der Entladebetrieb eingeleitet. Dadurch wird ein vergleichsweise fehlersicherer und insbesondere selbsttätig eingeleiteter Entladebetrieb ermöglicht.

Die erfindungsgemäße elektrisch betriebene Einheit ist vorzugsweise Teil eines Fahrzeugs und insbesondere zum Hochspannungsbetrieb eingerichtet. Mithin ist die elektrisch betriebene Einheit Teil eines vorstehend beschriebenen Hochspannungsnetzes oder bildet ein derartiges Hochspannungsnetz selbst aus. Die erfindungsgemäße elektrisch betriebene Einheit weist dabei die vorstehend beschriebene Entladevorrichtung auf. Beispielsweise umfasst die elektrisch betriebene Einheit einen Fahrmotor des Fahrzeugs, einen Klimakompressor, eine Kühl- oder Schmiermittelpumpe, eine Wasserpumpe, einen Lenkungsantrieb oder dergleichen. Insbesondere umfasst die elektrisch betriebene Einheit dabei auch einen Energiespeicher, insbesondere einen Kondensator, der in bestimmten Fällen (z. B. Unfall, Reparatur des Fahrzeugs etc.) vorzugsweise automatisch entladen werden muss.

Das erfindungsgemäße Entladeverfahren dient zum insbesondere aktiven Entladen des vorstehend beschrieben elektrischen (Hochspannungs-)Netzes bzw. der vorstehend beschriebenen elektrisch betriebenen Einheit. Das Entladeverfahren wird dabei mittels der vorstehend beschriebenen Entladevorrichtung insbesondere selbsttätig durchgeführt. Dabei wird mittels der Entladeschaltung das zu entladende Bauteil über den Strombegrenzungswiderstand und den Entladeschalter mit dem Referenzpotential verbunden. Dabei erwärmt sich der thermisch mit dem Entladeschalter und/oder dem Strombegrenzungswiderstand gekoppelte NTC-Widerstand. Dadurch wird der über den Strombegrenzungswiderstand und den Entladeschalter fließende Entladestrom reduziert.

Die erfindungsgemäße elektrisch betriebene Einheit sowie das erfindungsgemäße Entladeverfahren teilen sich somit auch die Vorteile der vorstehend beschriebenen Entladevorrichtung.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend werden Ausführungsbeispiele der Erfindung anhand einer Zeichnung näher erläutert. Darin zeigen:
- Fig. 1: in einem schematischen Schaltbild eine Entladevorrichtung für eine elektrisch betriebene Einheit eines Fahrzeugs, und
- Fig. 2: in Ansicht gemäß Fig. 1 ein alternatives Ausführungsbeispiel der Entladevorrichtung.

Einander entsprechende Teile sind in allen Figuren stets mit gleichen Bezugszeichen versehen.

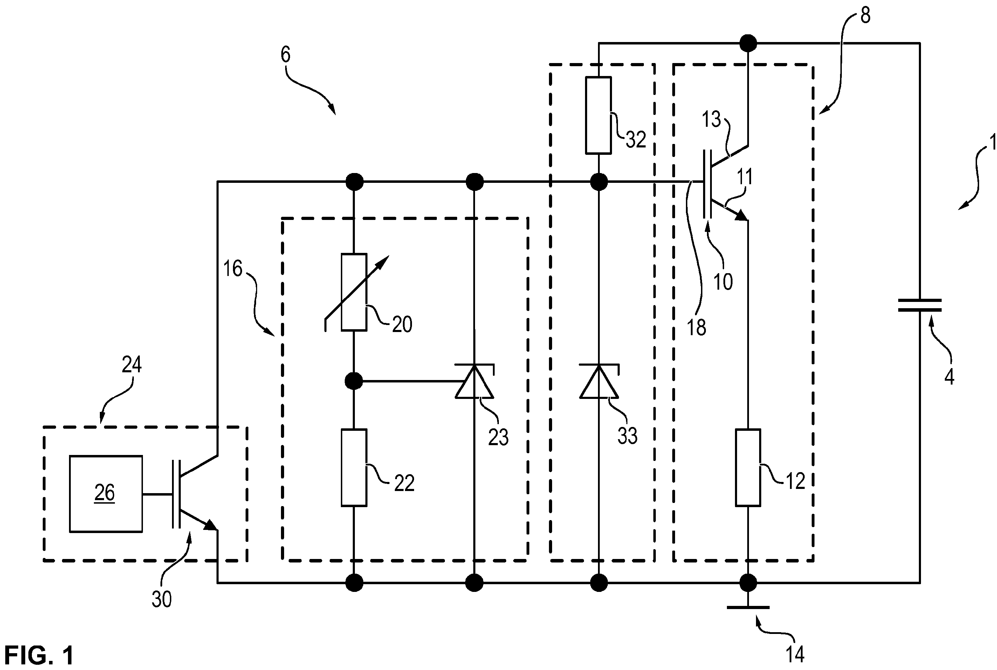

In Figur 1 ist in einem schematischen Blockschaltbild ein Teil eines elektrischen Hochspannungsnetzes einer elektrisch betriebenen Einheit 1 dargestellt. Die elektrisch betriebene Einheit 1 umfasst dabei als Bauteile einen nicht näher dargestellten Elektromotor sowie einen durch einen Kondensator 4 gebildeten Energiespeicher zur Stabilisierung eines zum Betrieb des Elektromotors erforderlichen Betriebsspannungswerts. Um in bestimmten Fällen den Kondensator 4 entladen zu können, weist die elektrisch betriebene Einheit 1 eine Entladevorrichtung 6 auf. Die Entladevorrichtung 6 weist wiederum eine Entladeschaltung 8 auf, die parallel zum Kondensator 4 geschaltet ist. Die Entladeschaltung 8 weist einen ersten Schalter, als "Entladeschalter 10" bezeichnet, und einen dazu in Reihe, d. h. an einen Emitteranschluss 11 des Entladeschalters 10 geschalteten Strombegrenzungswiderstand 12 auf. Der Entladeschalter 10 ist dabei durch einen IGBT gebildet. Im geschlossenen oder "durchgeschalteten" Schaltzustand des Entladeschalters 10 (mithin im "Entladebetrieb") ist der Kondensator 4 somit über den Entladeschalter 10, konkret dessen Kollektoranschluss 13 mit einem Referenzpotential, konkret Massepotential 14 verschaltet. Somit fließt im Entladebetrieb ein Entladestrom vom Kondensator 4 über den Entladeschalter 10 und den Strombegrenzungswiderstand 12 zum Massepotential 14.

In einem alternativen Ausführungsbeispiel ist der Entladeschalter 10 durch einen MOS-FET gebildet.

Um zu verhindern, dass aufgrund des Entladestroms im Entladebetrieb der Entladeschalter 10 über seine Belastungsgrenze erwärmt und dadurch zerstört wird, weist die Entladevorrichtung 6 außerdem eine Begrenzungsschaltung 16 auf. Diese Begrenzungsschaltung 16 ist dabei mit einem Steueranschluss 18 des Entladeschalters 10 verschaltet. Die Begrenzungsschaltung 16 weist einen NTC-Widerstand 20 auf, der konkret mit dem Steueranschluss 18 verschaltet ist. Der NTC-Widerstand 20 ist außerdem in nicht näher dargestellter Weise thermisch mit dem Entladeschalter 10 gekoppelt. Beispielsweise ist der NTC-Widerstand 20 dazu auf einem Gehäuse des Entladeschalters 10 angeordnet. Zusätzlich weist die Begrenzungsschaltung 16 einen weiteren, als "Zusatzwiderstand 22" bezeichneten Widerstand auf, der in Reihe zu dem NTC-Widerstand 20, konkret zwischen diesen und Massepotential 14 geschaltet ist. Außerdem weist die Begrenzungsschaltung 16 eine einstellbare Spannungsreferenz 23 auf, die in Form einer steuerbaren Zenerdiode (d. h. einer Zenerdiode mit zusätzlichem Steuereingang) zwischen den Steueranschluss 18 und Massepotential 14 geschaltet ist. Ein Steuereingang der Spannungsreferenz 23 ist dabei zwischen den NTC-Widerstand 20 und den Zusatzwiderstand 22 geführt.

Die Entladevorrichtung 6 weist außerdem eine Steuerschaltung 24 auf, die dazu dient, den Entladeschalter 10 im bestimmungsgemäßen Betriebszustand der elektrisch betriebenen Einheit 1 in seinem geöffneten Zustand zu halten und somit die Entladung des Kondensators 4 zu verhindern. Hierzu umfasst die Steuerschaltung 24 einen Controller 26 sowie von dem Controller 26 mittelbar oder unmittelbar betätigbare (auch: schaltbare) Schaltungsmittel in Form eines weiteren Schalters, hier als "Steuerschalter 30" bezeichnet. Der Steuerschalter 30 ist durch einen Bipolartransistor (oder alternativ durch einen MOS-FET oder dergleichen) gebildet, dessen Steueranschluss mit dem Controller 26 verschaltet ist. Im bestimmungsgemäßen Betriebszustand schließt der Controller 26 den Steuerschalter 30, wodurch der Steueranschluss 18 des Entladeschalters 10 mit Massepotential 14 verknüpft wird, sodass der Entladeschalter 10 geöffnet ist.

Im Entladebetrieb - d. h. bei geöffnetem Steuerschalter 30 - ist der Spannungsabfall an der Spannungsreferenz 23 so hoch, dass eine über einen weiteren Gate-Ladewiderstand 32 (auch als "Pull-up" bezeichnet) vom Kondensator 4 her am Steueranschluss 18 anliegende Spannung (im Folgenden als "Steuerspannung" bezeichnet) einen zur Durchschaltung des Entladeschalters 10 erforderlichen Schaltwert überschreitet und somit der Entladeschalter 10 leitend geschaltet wird. Aufgrund des über den Entladeschalter 10 und den Strombegrenzungswiderstand 12 fließenden Entladestroms erwärmen sich diese. Wegen der thermischen Kopplung des Entladeschalters 10 mit dem NTC-Widerstand 20 erwärmt sich auch der NTC-Widerstand 20. Dadurch steigt die elektrische Leitfähigkeit des NTC-Widerstands 20, wodurch wiederum die Spannung über der Spannungsreferenz 23 und somit auch die Steuerspannung am Steueranschluss 18 des Entladeschalters 10 sinken. Dadurch wird der über den Entladeschalter 10 fließende Entladestrom begrenzt, was wiederum dazu führt, dass die Verlustleistung im Entladeschalter 10 und damit auch dessen Erwärmung reduziert (begrenzt) werden. Insbesondere wird hierdurch eine Regelung der durch den Entladestrom bedingten "Entladetemperatur" des Entladeschalters 10 ausgebildet.

Die Entladevorrichtung 6 weist außerdem auch eine Zenerdiode 33 auf, die parallel zur Spannungsreferenz 23 geschaltet ist. Diese verhindert, dass die Steuerspannung am Steueranschluss 18 des Entladeschalters 10 bei niedrigen Temperaturwerten einen für den Entladeschalter 10 zulässigen Maximalwert überschreitet.

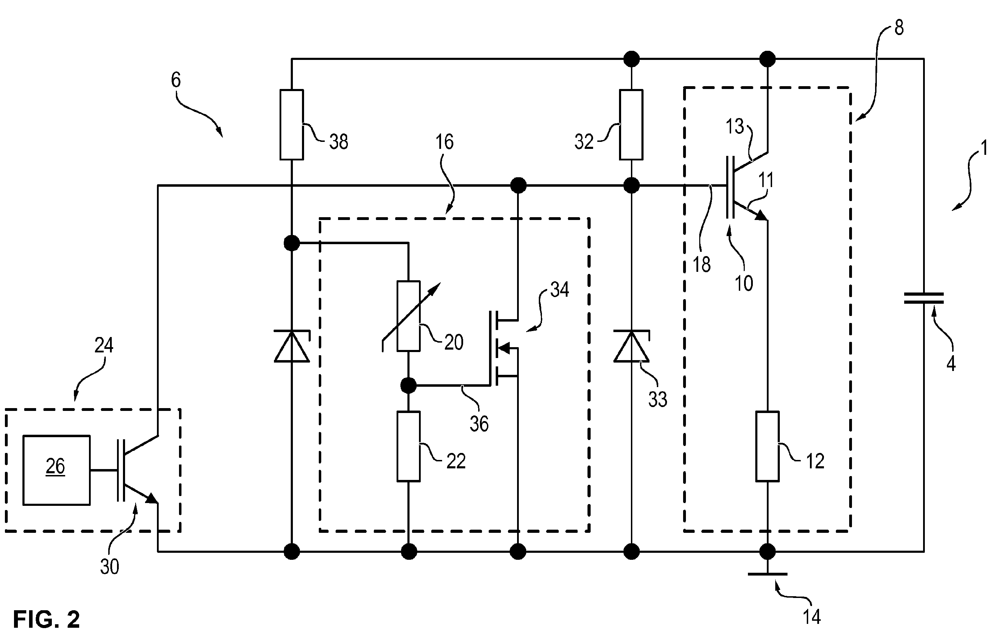

In Figur 2 ist ein alternatives Ausführungsbeispiel der elektrisch betriebenen Einheit 1, konkret der Begrenzungsschaltung 16 und der Steuerschaltung 24 dargestellt. Der NTC-Widerstand 20 der Entladeschaltung 16 ist auch in diesem Ausführungsbeispiel thermisch mit dem Entladeschalter 10 gekoppelt. Die Begrenzungsschaltung 16 umfasst aber zusätzlich einen Schalter, der im vorliegenden Ausführungsbeispiel als Feldeffekttranistor, konkret als MOS-FET 34 ausgebildet ist. Dieser MOS-FET 34 ist dabei zwischen den Steueranschluss 18 des Entladeschalters 10 und Massepotential 14 geschaltet. Ein als Steueranschluss dienender Gate-Anschluss 36 des MOS-FET 34 ist dabei zwischen dem NTC-Widerstand 20 und dem Zusatzwiderstand 22 angebunden. Der NTC-Widerstand 20 ist außerdem über einen weiteren Gate-Ladewiderstand 38 mit dem Kondensator 4 verschaltet. Erwärmt sich im Entladebetrieb der NTC-Widerstand 20, steigt - aufgrund des sinkenden Widerstands des NTC-Widerstands 20 - die Steuerspannung am Gate-Anschluss 36 des MOS-FET 34. Bei Erreichen eines Durchschaltwerts des MOS-FET 34 wird der Steueranschluss 18 des Entladeschalters 10 mit Massepotential 14 verbunden, sodass der Entladeschalter 10 wieder geöffnet und somit die Entladung des Kondensators 4 unterbunden wird. Ist der Entladeschalter 10 und somit auch der NTC-Widerstand 20 ausreichend abgekühlt, wird der MOS-FET 34 wieder geöffnet und somit der Entladeschalter 10 geschlossen.

In einem weiteren Ausführungsbeispiel, dessen Schaltung dem in Fig. 2 dargestellten Ausführungsbeispiel entspricht, sind der MOS-FET 34 und der NTC-Widerstand 20 derart abgestimmt, dass bei Erwärmung des NTC-Widerstands der Durchschaltwert zur vollständigen Durchschaltung des MOS-FET 34 nicht erreicht wird. Vielmehr geht der MOS-FET 34 in diesem Fall in einen teilleitenden Betrieb über, innerhalb dessen seine Leitfähigkeit (mit steigender Erwärmung des NTC-Widerstands) auch weiter zunimmt. Dadurch wird die Steuerspannung am Steueranschluss 18 des Entladeschalters 10 nur reduziert, so dass dieser aber nicht vollständig öffnet. Mithin kann auch mittels der Schaltung gemäß Fig. 2 der über den Entladeschalter 10 fließende Entladestrom begrenzt werden, was wiederum dazu führt, dass die Verlustleistung im Entladeschalter 10 und damit auch dessen Erwärmung reduziert (begrenzt) werden.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

### Bezugszeichenliste

- 1: elektrisch betriebene Einheit
- 4: Kondensator
- 6: Entladevorrichtung
- 8: Entladeschaltung
- 10: Entladeschalter
- 11: Emitteranschluss
- 12: Strombegrenzungswiderstand
- 13: Kollektoranschluss
- 14: Massepotential
- 16: Begrenzungsschaltung
- 18: Steueranschluss
- 20: NTC-Widerstand
- 22: Zusatzwiderstand
- 23: Spannungsreferenz
- 24: Steuerschaltung
- 26: Controller
- 30: Steuerschalter
- 32: Gate-Ladewiderstand
- 33: Zenerdiode
- 34: MOS-FET
- 36: Gate-Anschluss
- 38: Gate-Ladewiderstand

## Patentansprüche

1. Entladevorrichtung (6) zum aktiven Entladen eines elektrischen Netzes oder einer elektrisch betriebenen Einheit (1),
umfassend
- eine Entladeschaltung (8), die einen Strombegrenzungswiderstand (12) und einen ersten Schalter (10) zum Verbinden eines zu entladenden Bauteils (4) des Netzes bzw. der elektrisch betriebenen Einheit (1) mittelbar über den Strombegrenzungswiderstand (12) mit einem Referenzpotential (14) aufweist, und
- eine steueranschlussseitig zu dem ersten Schalter (10) angeordnete Begrenzungsschaltung (16) zur Begrenzung einer im Entladebetrieb an dem ersten Schalter (10) und/oder dem Strombegrenzungswiderstand (12) auftretenden Erwärmung, wobei die Begrenzungsschaltung (16) einen NTC-Widerstand (20) aufweist, der thermisch mit dem ersten Schalter (10) und/oder dem Strombegrenzungswiderstand (12) gekoppelt ist.

2. Entladevorrichtung (6) nach Anspruch 1,
wobei der erste Schalter (10) durch einen Leistungstransistor, insbesondere einen IGBT oder einen MOS-FET gebildet ist.

3. Entladevorrichtung (6) nach Anspruch 1 oder 2,
wobei der NTC-Widerstand (20) mit einem Steueranschluss (18) des ersten Schalters (10) verschaltet ist.

4. Entladevorrichtung (6) nach Anspruch 3,
mit einer Spannungsreferenz (23), die zwischen den Steueranschluss (18) des ersten Schalters (10) und das Referenzpotential (14) geschaltet ist, wobei der NTC-Widerstand (20) außerdem mit einem Steuereingang der Spannungsreferenz (23) verschaltet ist.

5. Entladevorrichtung (6) nach Anspruch 1 oder 2,
wobei die Begrenzungsschaltung (16) einen zweiten Schalter (34) aufweist, mit dessen Steueranschluss (36) der NTC-Widerstand (20) verschaltet ist, wobei der zweite Schalter (34) im vollständig eingeschalteten Zustand den Steueranschluss (18) des ersten Schalters (10) mit dem Referenzpotential (14) verbindet.

6. Entladevorrichtung (6) nach Anspruch 5,
wobei der zweite Schalter durch einen Feldeffekttransistor (34), insbesondere einen MOS-FET gebildet ist.

7. Entladevorrichtung (6) nach einem der Ansprüche 1 bis6,
mit einer Steuerschaltung (24), die Schaltungsmittel (26,30) aufweist, um den Steueranschluss (18) des ersten Schalters (10) reversibel mit dem Referenzpotential (14) zu verschalten.

8. Entladevorrichtung (6) nach Anspruch 7,
wobei die Schaltungsmittel einen dritten Schalter, insbesondere einen Transistor (30) umfassen, der mit dem Steueranschluss (18) des ersten Schalters (10) gekoppelt ist,

9. Elektrisch betriebene Einheit (1) für ein Fahrzeug, die die Entladevorrichtung (6) nach einem der Ansprüche 1 bis 8 umfasst.

10. Entladeverfahren zum aktiven Entladen eines elektrischen Netzes oder einer elektrisch betriebenen Einheit (1) mittels der Entladevorrichtung (6) nach einem der Ansprüche 1 bis 8, wobei
mittels der Entladeschaltung (8) das zu entladende Bauteil (4) des Netzes bzw. der zu entladenden elektrisch betriebenen Einheit (1) über den Strombegrenzungswiderstand (12) und den ersten Schalter (10) mit dem Referenzpotential (14) verbunden wird, wobei sich der thermisch mit dem ersten Schalter (10) und/oder dem Strombegrenzungswiderstand (12) gekoppelte NTC-Widerstand (20) der steueranschlussseitig zu dem ersten Schalter (10) angeordneten Begrenzungsschaltung (16) erwärmt, und wobei dadurch der über den Strombegrenzungswiderstand (12) und den ersten Schalter (10) fließende Entladestrom reduziert wird.

## Claims

1. Discharging device (6) for actively discharging an electrical network or an electrically operated unit (1), comprising
- a discharging circuit (8) which has a current limiting resistor (12) and a first switch (10) for connecting a component (4) to be discharged of the network or of the electrically operated unit (1) to a reference potential (14) indirectly via the current limiting resistor (12), and
- a limiting circuit (16) which is arranged on the control connection side of the first switch (10) and is intended to limit heating which occurs at the first switch (10) and/or at the current limiting resistor (12) in the discharging mode, wherein the limiting circuit (16) has an NTC thermistor (20) which is thermally coupled to the first switch (10) and/or to the current limiting resistor (12).

2. Discharging device (6) according to Claim 1,
wherein the first switch (10) is formed by a power transistor, in particular an IGBT or a MOSFET.

3. Discharging device (6) according to Claim 1 or 2,
wherein the NTC thermistor (20) is connected to a control connection (18) of the first switch (10).

4. Discharging device (6) according to Claim 3, having a voltage reference (23) which is connected between the control connection (18) of the first switch (10) and the reference potential (14), wherein the NTC thermistor (20) is also connected to a control input of the voltage reference (23).

5. Discharging device (6) according to Claim 1 or **2,**
wherein the limiting circuit (16) has a second switch (34), to the control connection (36) of which the NTC thermistor (20) is connected, wherein the second switch (34) connects the control connection (18) of the first switch (10) to the reference potential (14) in the fully switched-on state.

6. Discharging device (6) according to Claim 5,
wherein the second switch is formed by a field effect transistor (34), in particular a MOSFET.

7. Discharging device (6) according to one of Claims 1 to 6,
having a control circuit (24) which has circuit means (26, 30) in order to reversibly connect the control connection (18) of the first switch (10) to the reference potential (14).

8. Discharging device (6) according to Claim 7,
wherein the circuit means comprise a third switch, in particular a transistor (30), which is coupled to the control connection (18) of the first switch (10).

9. Electrically operated unit (1) for a vehicle, which unit comprises the discharging device (6) according to one of Claims 1 to 8.

10. Discharging method for actively discharging an electrical network or an electrically operated unit (1) by means of the discharging device (6) according to one of Claims 1 to 8, wherein
the discharging circuit (8) is used to connect the component (4) to be discharged of the network or of the electrically operated unit (1) to be discharged to the reference potential (14) via the current limiting resistor (12) and the first switch (10), wherein the NTC thermistor (20) of the limiting circuit (16) arranged on the control connection side of the first switch (10), which NTC thermistor is thermally coupled to the first switch (10) and/or to the current limiting resistor (12), heats up, and wherein the discharge current flowing via the current limiting resistor (12) and the first switch (10) is reduced as a result.

## Revendications

1. Dispositif de décharge (6) pour décharger activement un réseau électrique ou une unité (1) fonctionnant électriquement,
comprenant
- un circuit de décharge (8) qui comprend une résistance (12) de limitation de courant et un premier commutateur (10) pour connecter un composant (4) à décharger du réseau ou de l'unité (1) fonctionnant électriquement, indirectement par l'intermédiaire de la résistance (12) de limitation de courant, à un potentiel de référence (14), et
- un circuit de limitation (16) agencé du côté de la connexion de commande vers le premier commutateur (10) pour limiter un échauffement apparaissant lors du fonctionnement en décharge au niveau du premier commutateur (10) et/ou de la résistance (12) de limitation de courant, le circuit de limitation (16) comprenant une résistance NTC (20) qui est reliée thermiquement au premier commutateur (10) et/ou à la résistance (12) de limitation de courant.

2. Dispositif de décharge (6) selon la revendication 1, dans lequel le premier commutateur (10) est formé par un transistor de puissance, en particulier un IGBT ou un MOS-FET.

3. Dispositif de décharge (6) selon la revendication 1 ou la revendication 2,
dans lequel la résistance NTC (20) est connectée à une borne de commande (18) du premier commutateur (10).

4. Dispositif de décharge (6) selon la revendication 3, comprenant une référence de tension (23) qui est connectée entre la borne de commande (18) du premier commutateur (10) et le potentiel de référence (14), la résistance NTC (20) étant en outre connectée à une entrée de commande de la référence de tension (23).

5. Dispositif de décharge (6) selon la revendication 1 ou la revendication **2,**
dans lequel le circuit de limitation (16) comprend un deuxième commutateur (34) dont la borne de commande (36) est connectée à la résistance NTC (20), le deuxième commutateur (34) connectant, à l'état complètement activé, la borne de commande (18) du premier commutateur (10) au potentiel de référence (14).

6. Dispositif de décharge (6) selon la revendication 5, dans lequel le deuxième commutateur est formé par un transistor à effet de champ (34), en particulier un MOS-FET.

7. Dispositif de décharge (6) selon l'une des revendications 1 à 6,
comprenant un circuit de commande (24) qui comprend des moyens de commutation (26, 30) pour connecter de manière réversible la borne de commande (18) du premier commutateur (10) au potentiel de référence (14).

8. Dispositif de décharge (6) selon la revendication 7, dans lequel les moyens de commutation comprennent un troisième commutateur, en particulier un transistor (30), qui est relié à la borne de commande (18) du premier commutateur (10),

9. Unité électrique (1) pour un véhicule, qui comprend le dispositif de décharge (6) selon l'une des revendications 1 à 8.

10. Procédé de décharge pour décharger activement un réseau électrique ou une unité (1) fonctionnant électriquement au moyen du dispositif de décharge (6) selon l'une des revendications 1 à 8, dans lequel
au moyen du circuit de décharge (8), le composant (4) à décharger du réseau ou de l'unité (1) fonctionnant électriquement à décharger est relié au potentiel de référence (14) via la résistance (12) de limitation de courant et le premier commutateur (10), la résistance NTC (20), thermiquement reliée au premier commutateur (10) et/ou à la résistance (12) de limitation de courant, du circuit de limitation (16) situé côté borne de commande au premier commutateur (10), s'échauffe, et le courant de décharge circulant à travers la résistance (12) de limitation de courant et le premier commutateur (10) est ainsi réduit.
